Europäisches Patentamt

European Patent Office (11) Numéro de publication: **0 012 042**

Office européen des brevets **B1**

(19)

(12) **FASCICULE DE BREVET EUROPEEN**

(45) Date de publication du fascicule du brevet: **27.01.82** (51) Int. Cl.³: **G 21 C 13/02, F 22 B 37/24**

(21) Numéro de dépôt: **79400401.0**

(22) Date de dépôt: **18.06.79**

(54) Dispositif de supportage et de protection pour chaudières nucléaires.

(30) Priorité: **23.06.78 FR 7820405**

(43) Date de publication de la demande:
**11.06.80 Bulletin 80/12**

(45) Mention de la délivrance du brevet:
**27.01.82 Bulletin 82/4**

(84) Etats contractants désignés:
**AT BE CH DE GB IT LU NL SE**

(56) Documents cités:
**DE - A - 840 335**
**FR - A - 335 545**
**FR - A - 1 440 418**
**FR - A - 1 489 557**
**FR - A - 2 096 288**
**FR - A - 2 173 914**
**FR - E - 3 036**
**LU - A - 78 145**
**US - A - 3 185 631**
**US - A - 3 771 499**

(73) Titulaire: **ATELIERS ET CHANTIERS DE BRETAGNE**
**ACB Société anonyme dite:**
**Prairie-au-Duc**
**F-44200 Nantes (FR)**

(72) Inventeur: **Pierart, Robert**
**46, boulevard des Américains**
**F-44000 Nantes (FR)**

(74) Mandataire: **Weinmiller, Jürgen et al,**
**Zeppelinstrasse 63**
**D-8000 München 80 (DE)**

Courier Press, Leamington Spa, England.

### Dispositif de supportage et de protection pour
### chaudières nucléaires

La présente invention se rapporte d'une manière générale à un dispositif permettant de supporter et maintenir un ensemble d'appareils en liaison permanente, et concerne plus particulièrement un dispositif de supportage rigide d'un réacteur nucléaire associé à des générateurs de vapeur pour constituer une chaudière nucléaire.

On a déjà proposé des structures métalliques enveloppant au moins partiellement des appareils tels que par exemple des échangeurs de chaleur, pour les supporter par l'intermédiaire d'organes d'appui susceptibles de laisser à l'appareil certains degrés de liberté dans sa structure (FR—A—1440418).

Toutefois, lorsqu'il s'agit de chaudières nucléaires compactes de petite ou moyenne puissance constituées d'un ensemble d'appareils comprenant une cuve de réacteur associée à des générateurs de vapeur par des tubulures de liaison aussi courtes que possible pour former un ensemble monobloc, les problèmes de supportage sont nombreux et particuliers.

En effet, de telles chaudières nucléaires doivent être supportées et maintenues dans leur structure d'appui, sans jeu, dans une position fixe bien déterminée et sans subir, en aucun point, de contraintes anormales, quelles que soient les dilatations et les déformations relatives des appareils constituant ladite chaudière ou de la structure d'appui elle-même.

Celà veut dire, dans le cas présent, que l'axe de la cuve du réacteur et de ses générateurs associés au moyen de tubulures de liaison courtes, doit demeurer fixe dans la structure de supportage, malgré les dilatations que subissent ces appareils, celles-ci devant s'effectuer librement, et que des déformations éventuelles de l'ensemble supporté ou de la structure pouvant résulter de variations rapides de température ou de toute autre raison, n'y engendront pas de contraintes supplémentaires appréciables, notamment dans les tubulures de liaison entre la cuve du réacteur et les générateurs de vapeur.

D'autre part, des sollicitations dynamiques extérieures, tels que séismes ou chocs de directions quelconques, ne doivent induire dans lesdites tubulures de liaison que des contraintes faibles, l'essentiel des efforts étant repris par la structure de supportage.

Enfin, le maintien de la chaudière nucléaire dans la structure doit être réalisé sans jeu appréciable pour que des sollicitations dynamiques extérieures n'amènent aucun déplacement relatif de l'un par rapport à l'autre.

La présente invention a donc notamment pour but de résoudre le problème particulier ci-dessus de supportage d'un réacteur nucléaire associé à des générateurs de vapeur au moyen de liaisons courtes, lequel supportage est assuré par une structure particulièrement rigide et des moyens évitant les déplacements relatifs de la cuve et des générateurs, lors de chocs ou d'accélérations diverses dans toutes les directions, absorbant les efforts dynamiques correspondants et limitant à une valeur extrèmement faible le déplacement des générateurs de vapeur dans l'hypothèse d'une rupture de leurs liaisons avec la cuve du réacteur.

De plus, la structure de supportage, selon l'invention, permet avantageusement l'assise de l'ensemble de génération de vapeur sans nécessiter de moyens de fixation et d'ancrages complémentaires, et cela tout en assurant la protection biologique nécessaire.

A cet effet, l'invention a pour objet un dispositif de supportage et de protection pour une chaudière nucléaire compacte constituée par un réacteur nucléaire en forme de cuve disposé dans l'axe vertical de l'ensemble, et par au moins deux générateurs de vapeur disposés symétriquement autour de ce réacteur et reliés à lui chacun par une tubulure courte celle-ci assurant la solidarisation mécanique du générateur et de la cuve du réacteur et permettant la circulation, entre eux, d'un fluide d'échange thermique primaire, ce dispositif de supportage étant du type comprenant une structure métallique enveloppant au moins partiellement la chaudiére nucléaire et la supportant par l'intermédiare d'organes d'appui, caractérisé en ce qu'en vue d'obtenir:

— que l'axe du réacteur et de ses générateurs associés (20) soit maintenu dans une position rigoureusement fixe dans ladite structure, malgré des dilatations et les déformations que subissent ces appareils ou ladite structure;

— que ces dilatations, ces déformations ou des sollicitations dynamiques extérieures, tels que séismes ou chocs de directions quelconques, n'induisent que des contraintes faibles dans les tubulures de liaison entre la cuve du réacteur et les générateurs de vapeur;

— et que soit assurées, en même temps, la protection mécanique de la chaudière et la protection biologique autour du réacteur;

— ladite structure métallique se compose:

    — d'une partie inférieure très rigide dans laquelle est introduite la cuve du réacteur qui s'y appuie, ainsi que ses générateurs de vapeur associés, par l'intermédiaire de tourillons, soudés en saillie sur ladite cuve et lesdits générateurs, tous ces tourillons étant situés sensiblement dans un même plan horizontal, ayant leurs axes concourants à l'axe de ladite cuve et étant montés glissants dans des paliers à rotule intégrés à ladite structure, de mainière que celle-ci supporte et maintienne l'ensemble de la chaudière par l'intermédiaire desdits tourillons; lesdits tourillons de support ayant une section transversale polygonale et lesdits paliers de support un alésage polygonal correspondant, chacun comportant deux faces d'appui conjuguées planes et symétriques par rapport à un plan vertical (forme en V);

— et d'autre part, d'une partie supérieure formant couvercle fixée rigidement sur la structure inférieure, dont la partie centrale forme de préférence les parois de la piscine de déchargement du réacteur et dont la partie externe forme des parois latérales qui enveloppent entièrement lesdits générateurs de vapeur pour assurer leur protection mécanique et la protection biologique autour d'eux, ladite partie supérieure maintenant an même temps l'extrémité supérieure des générateurs de vapeur par l'intermédiaire de tourillons soudés dans l'axe de chacun d'eux.

En bref, la partie inférieure de la structure supporte rigidement la cuve et les générateurs de vapeur tout en participant à la protection biologique autour de la cuve, tandis que la partie supérieure coiffe la partie inférieure pour constituer, d'une parte, les parois de la piscine de déchargement, et d'autre part, la protection biologique autour des générateurs de vapeur.

Selon une autre caractéristique de l'invention, la partie inférieure précitée est essentiellement constituée par deux enveloppes co-axiales entourant la cuve du réacteur et soudées sur une semelle épaisse servant d'assise à l'ensemble de génération de vapeur, ladite cuve comportant latéralement au moins deux tourillons en saillie précités de section polygonale qui prennent un appui glissant dans des paliers à rotule d'alésage polygonal correspondant intégrés dans l'enveloppe intérieure, tandis que chaque générateur comporte latéralement en partie basse un tourillon en saillie précité de section polygonale prenant un appui glissant dans un palier à rotule d'alésage polygonal correspondant intégré dans une extension latérale de ladite partie inférieure qui enveloppe au moins partiellement les boîtes à eau des générateurs de vapeur.

On comprend que les tourillons en saillie de la cuve et des générateurs de vapeur, qui ont une section polygonale et qui reposent sur des paliers à rotules intégrés rigidement à la structure inférieure par des faces d'appui conjuguées planes disposées en Vé, assureront toujours une position rigoureuse de l'axe de la cuve du réacteur, qui est en même temps celui de l'ensemble de la chaudière nucléaire (20) et ceci quelles que soient les dilatations et sollicitations auxquelles celle-ci sera soumise.

Les rotules des paliers permettront d'assurer un bon portage des tourillons en saillie qui s'y appuient, malgré des imperfections de fabrication et des déformations éventuelles de la structure ou de l'ensemble supporté.

Selon encore une autre caractéristique de l'invention, chaque générateur de vapeur comprend, en outre, à son extrémité supérieure ou sommet, un tourillon en saillie précité de section polygonale prenant appui dans un palier à rotule d'alésage polygonal correspondant prévu dans la partie supérieure précitée et situé sur l'axe vertical du générateur. On notera encore qu'au moins les tourillons en saillie soudés sur la cuve comportent avantageusement un alésage intérieur pour permettre notamment le passage de tuyauteries implantés dans l'axe dudit alésage.

On ajourtera encore ici que les enveloppes coaxiales précitées constituant la partie inférieure qui supporte la cuve et ses générateurs associés par l'intermédiaire des tourillons en saillie précités, comprennant une enveloppe interne ayant la forme d'un polyèdre, et une enveloppe externe présentant également la forme d'un polyèdre, lesdites enveloppes définissant entre elles et avec la cuve des volume étanches et remplis d'eau pour assurer la protection neutronique. D'un autre côté, les parois précités de la partie supérieure enveloppant et maintenant les générateurs de vapeur forment des prismes droit à base trapézoîdale ayant des parois communes avec la piscine de déchargement.

D'autres caractéristiques et avantages de l'invention apparaîtront mieux dans le description détaillée qui suit et se réfère aux dessins annexés, donnés uniquement à titre d'exemple, et dans lesquels.

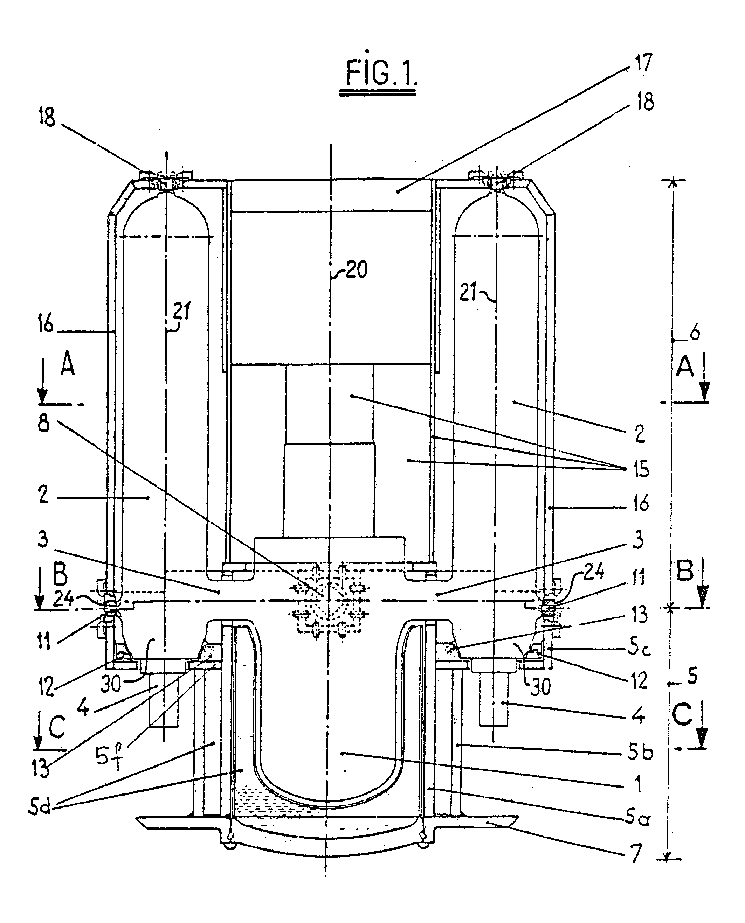

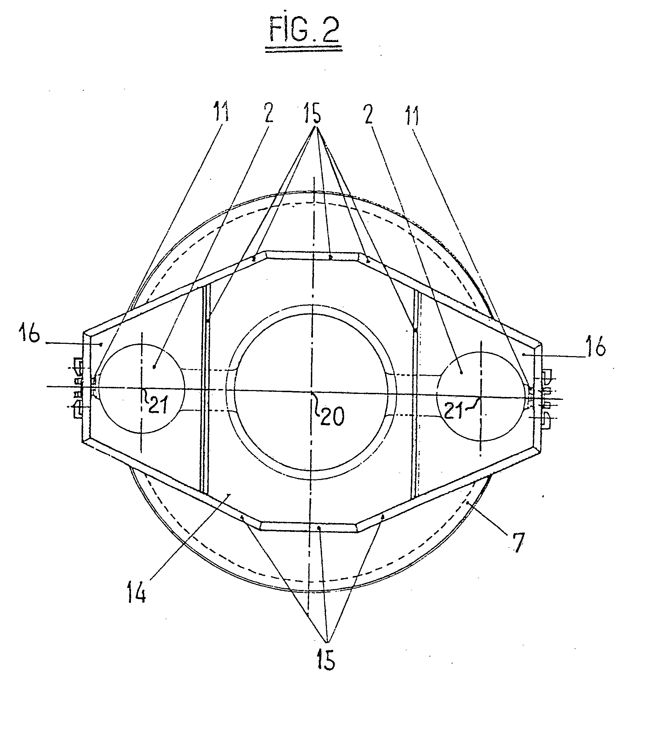

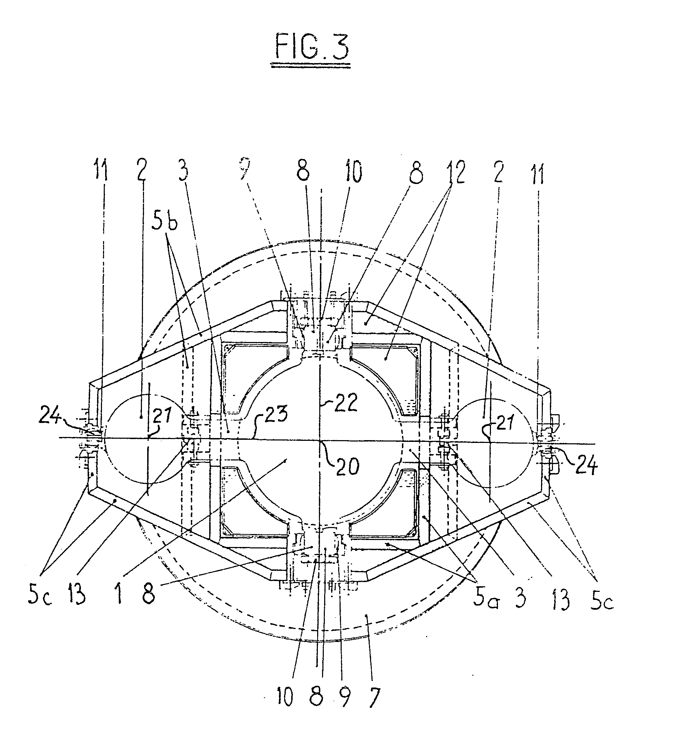

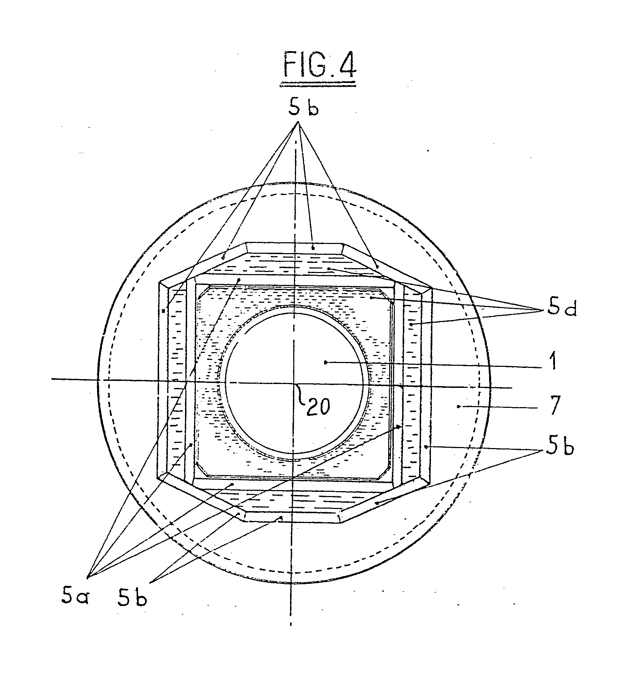

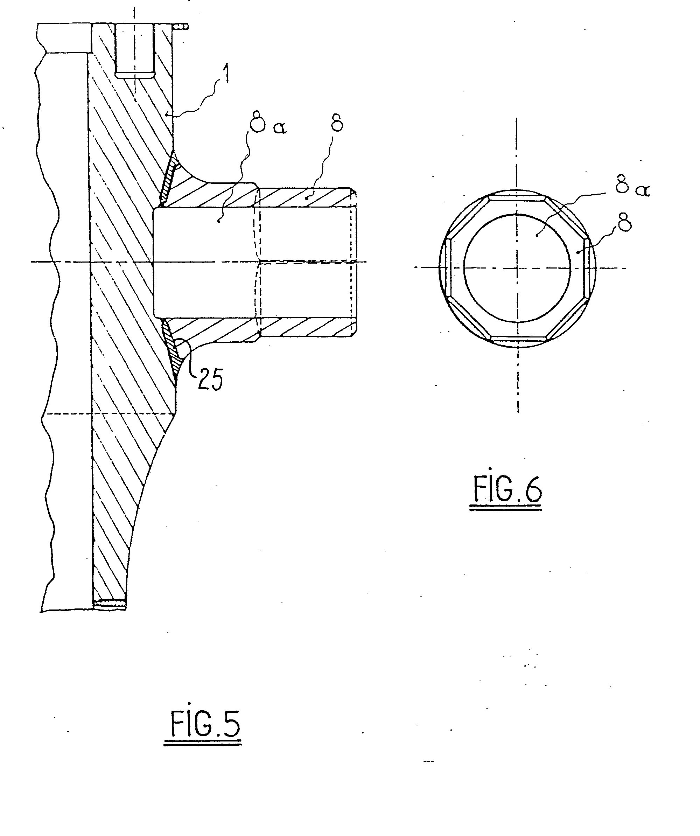

La figure 1 est une vue en coupe longitudinale de la structure de supportage et de l'ensemble cuve-générateurs de vapeur; la figure 2 est une vue en coupe suivant la ligne A——A de la figure 1; la figure 3 est une vue en coupe suivant la ligne B——B de la figure 1; la figure 4 est une vue en coupe suivant la ligne C——C de la figure 1; la figure 5 est une vue agrandie et en coupe axiale de l'un des éléments en saillie soudés sur la cuve; et la figure 6 est une vue en coupe transversale d'un autre mode de réalisation d'élément en saillie.

Suivant un exemple de réalisation, et comme on le voit bien sur les figures 1 à 3, un dispositif conforme à l'invention supporte une cuve de réacteur 1 relié à deux générateurs de vapeur 2 au moyen de tubulures très courtes 3. On a montré en 4 des pompes de circulation primaire qui sont fixées sous les boîtes à eau 30 des générateurs 2. On a désigné par 20 sur les figures 1 à 4, l'axe de la cuve 1 et par 21 les axes respectifs des générateurs 2. Selon l'exemple illustré, les axes 20 et 21 de la cuve 1 et des générateurs 2 sont situés dans un même plan que l'on appellera, dans la description qui suit, plan longitudinal, tandis qu'on désignera par direction transversale toute direction perpendiculaire à ce plan.

Le dispositif de supportage de l'invention se compose essentiellement de deux parties de structures métalliques très rigides, à savoir une partie inférieure 5 et une partie supérieure 6 reliées rigidement l'une à l'autre par des moyens d'agrafage appropriés et selon un plan jointif comportant des chicanages.

La partie inférieure 5 est essentiellement constituée de deux enveloppes coaxiales interne 5a et externe 5b, ainsi que d'une extension latérale 5c qui enveloppe les boîtes à eau 30 des générateurs 2.

Les enveloppes 5a et 5b qui entourent la cuve 1, sont soudés par leur base à une semelle 7 en tôle de forte épaisseur et à leurs parties supérieures par une plaque intermédiaire métallique 5f. Elles définissent entre elles et avec la cuve 1 des volumes étanches ou caissons 5d qui sont remplis d'eau pour assurer la protection neutronique voulue.

Comme on le voit mieux sur la figure 4 et, suivant un exemple de réalisation préférée, les enveloppes coaxialles 5a et 5b présentent la forme d'un polyèdre. Plus précisément, et selon un exemple de réalisation, l'enveloppe 5a est réalisée par assemblage par soudure de tôles de forte épaisseur pour former un parallélèpipède rectangle, lequel est doublé coaxialement par l'enveloppe externe 5b qui présente la forme d'un prisme droit à base octogonale irréguliére constitué également par des tôles épaisses. Cette enveloppe prismatique 5b comporte à sa partie supérieure, comme on le voit bien sur la figure 1, l'extension latérale précitée 5c qui fait saillie de chaque côté pour envelopper et supporter la partie inférieure des générateurs 2.

La cuve 1 et les générateurs 2 reposent sur la partie inférieure 5 par l'intermédiaire d'éléments en sallie, respectivement 8 et 11, qui présentent la forme générale de tourillons.

Selon un exemple de réalisation, les éléments en saillie 8 sont soudés latéralement sur la cuve de telle façon que leur axe commun 22 soit perpendiculaire à l'axe commun 23 des éléments en saillie 11 soudés latéralement, en partie basse, sur les générateurs 2. Et comme il apparaît sur la figure 3, les éléments en sallie ou goujons 8 sont ajustés glissants dans des paliers à rotule 9 placés dans ou supportés par les deux enveloppes 5a et 5b, tandis que l'élément en saillie 11 de chaque générateur 2 est également ajusté glissant dans un palier à rotule 24 prévu dans l'extension latérale 5c de la partie inférieure 5.

Selon une caractéristique essentielle de l'invention les éléments en saillie 8 et 11 respectivement soudés sur la cuve 1 et les générateurs 2, présentent en section transversale une formepolygonale qui s'adapte dans des paliers à rotule d'alésage polygonal correspondant de façon à maintenir rigoureusement fixe le plan longitudinal passant par les axes 20 et 21, en case de chocs transversal et même longitudinal, et ce tout en autorisant les dilatations de l'ensemble supporté grâce aux appuis glissants des éléments en saillie.

Comme on le voit sur les figures 1 à 3, les éléments 8 et 11 peuvent présenter une forme carrée en section transversale, de même que l'alésage des paliers qui les reçoivent, de telle sorte que l'une des diagonales du carrée soit orientée verticalement, et l'autre horizontalement. On obtient ainsi un appui en forme de V, comme on l'a mentionné au début de la présente description, lequel appui maintient de maniére rigoureusement fixe l'ensemble cuve-générateur dans la structure de support.

Les éléments en saillie 8 et 11 peuvent, selon un autre mode de réalisation, présenter, en section transversale, la forme d'un octogone régulier, comme on l'a montré sur la figure 6, étant bien entendu qu'on prévoira dans ce cas là des paliers 9 et 24 d'alésage octogonal correspondant. On comprend qu'une telle forme octogonale réalisera également un positionnement fixe de la cuve et de ses générateurs associés dans la structure de support selon l'invention.

On notera ici que les éléments en saillie 8 soudés sur la cuve 1 peuvent avantageusement comporter un alésage intérieur 8a visible sur la figure 5, lequel alésage permet de faciliter le contrôle de la soudure de liaison 25 sur la cuve et également le passage de tuyauteries d'injection de sécurité non représentées et implantées dans l'axe dudit alésage. Si on le désire, on peut laisser un jeu entre l'extrémité de chaque élément en saillie 8, et une butée de sécurité 10, visible sur la figure 3. Cette butée permet d'empêcher le déplacement de la cuve suivant l'axe des éléments 8 en case de rupture de liaisons 3 entre la cuve et les générateurs.

En partie basse de chaque générateur 2, sont prévus diamétralement opposés deux dispositifs de butée laissant toute liberté de dilatation. L'un deux 12 situé du côté de l'élément en saillie 11 est fixe et bloque le générateur de vapeur longitudinalement dans le cas d'une rupture guillotine de la liaison 3; l'autre 13 situé du côté de la cuve 1 bloque le générateur transversalement dans le même cas de rupture.

La partie de structure supérieure 6 qui en quelque sorte coiffe la partie inférieure 5 est constituée d'un assemblage de tôles de forte épaisseur de façon à réaliser dans sa partie centrale 14 (figure 2) les parois de la piscine de déchargement 15 de la cuve 1 due réacteur, ainsi que deux prismes droits 16 à base trapézoïdale formant une enveloppe autour des deux générateurs de vapeur, la grande base du trapèze constituant dans la partie inférieure de chaque prisme une des parois de ladite piscine de déchargement.

On a montré en 17 sur la figure 1, des caissons servant de raidisseurs et reliant les deux prismes 16 en leur partie haute.

Comme on le voit bien sur la figure 1, chaque générateur de vapeur 2 possède à son extrémité supérieure ou sommet un élément en saillie 18 qui est soudé sur le générateur et qui est du même type que les éléments 8 et 11 décrits précédemment. Ces éléments 18, qui ont de préférence une section transversale carrée sont ajustés glissant dans un palier à rotule d'alésage rectangulaire qui est logé dans la partie haute de la structure supérieure 5 et qui est situé sur l'axe 21 du générateur 2. Comme les éléments d'appui ou goujons 8 et 11, les éléments 18 participent au blocage de la cuve et des générateurs, et plus particulièrement de ces derniers dans le sens transversal en cas de choc ou de rupture de la liaison 3 cuve 1-générateurs 2.

Ainsi l'ensemble de la structure 6 et 5 réalise un dispositif de supportage très rigide et de très grande résistance mécanique renfermant le circuit primaire d'une chaudière nucléaire en réalisant une protection biologique efficace et assurant un positionnement fixe et précis des composants dans tous les plans. En outre, l'ensemble cuve-générateurs, bien que parfaitement maintenu dans la structure métallique, ne subit en aucune circonstance des contraintes excessives en raison de la souplesse de la liaison cuve-générateurs qui est beaucoup plus grande que celle de la structure de supportage.

Au surplus, la conception de cette structure comme on le comprend à la lumière des dessins, réserve les plus grandes facilités d'accès et de démontage pour l'inspection des appareils et de tous les organes mécaniques, tels que par exemple les paliers à rotule dans lesquels sont ajustés les éléments ou goujons 8, 11 et 18 associés à la cuve 1 et aux générateurs 2.

On a donc réalisé suivant l'invention, un dispositif de supportage qui maintient de manière rigoureusement fixe l'axe d'une cuve de réacteur et de ses générateurs associés, ce qui évite avantageusement tout risque de rupture entre ces éléments si ceux-ci subissaient par exemple des chocs suivant une direction longitudinale ou transversale, et celà tout en autorisant les dilatations possibles de l'ensemble supporté.

Bien entendu, l'invention n'est nullement limitée au mode de réalisation décrit et illustré qui n'a été donné qu'à titre d'exemple.

C'est ainsi que le réacteur peut être équipé d'un nombre différent de générateurs de vapeur et que la cuve de ce réacteur peut comporter plus de deux tourillons d'appui sur la partie de structure inférieure. De même ces tourillons d'appui pourraient présenter une forme polygonale autre qu'une forme carrée ou octogonale; sans sortir du cadre de l'invention.

## Revendications

1. Dispositif de supportage et de protection pour une chaudière nucléaire compacte constituée par un réacteur nucléaire en forme de cuve (1) disposé dans l'axe vertical (20) de l'ensemble, et par au moins deux générateurs de vapeur (2) répartis régulièrement autour de ce réacteur et reliés à lui chacun par une tubulure courte (3) celle-ci assurant la solidarisation mécanique du générateur et de la cuve du réacteur et permettant la circulation, entre eux, d'un fluide d'échange thermique primaire, ce dispositif de supportage étant du type comprennant une structure métallique enveloppant au moins partiellement la chaudière nucléaire et la supportant par l'intermédiaire d'organes d'appui, caractérisé par le fait que ladite structure métallique se compose:

— d'une partie inféreure (5) très rigide dans laquelle est introduite la cuve du réacteur qui s'y appuie, ainsi que ses générateurs de vapeur (2) associés, par l'intermédiaire de tourillons (11), soudés en saillie sur ladite cuve (1) et lesdits générateurs (2), tous ces tourillons étant situés sensiblement dans un même plan horizontal, ayant leurs axes concourants à l'axe de ladite cuve et étant montés glissants dans des paliers à rotule (8) intégrés à ladite structure, de manière que celle-ci supporte et maintienne l'ensemble de la chaudière par l'intermediaire desdits tourillons (11); lesdits tourillons de support ayant une section transversale polygonale et lesdits paliers de support un alésage polygonal correspondant, chacun comportant deux faces d'appui conjugées planes et symétriques par rapport à un plan vertical (forme en V);
— et d'autre part, d'une partie supérieure (6) formant couvercle fixée rigidement sur la structure inférieure, dont la partie centrale forme de préférence les parois de la piscine de déchargement (15) du réacteur et dont la partie externe forme des parois latérales qui enveloppent entièrement lesdits générateurs de vapeur pour assurer leur protection mécanique et la protection biologique autour d'eux, cette partie supérieure maintenant en même temps l'extrémité supérieure des générateurs de vapeur par l'intermédiaire de tourillons soudés dans l'axe de chacun d'eux.

2. Dispositif selon la revendication 1, caractérisé en ce que la partie de structure inférieure (5) précitée étant essentiellement constituée par deux enveloppes coaxiales (5a, 5b) entourant la cuve (1) du réacteur et soudées sur une semelle (7) épaisse servant d'assise à l'ensemble de génération de vapeur, ladite cuve comporte latéralement au moins deux tourillons (11) en saillie précités de section polygonale prenant un appui glissant dans des paliers à rotule d'alésage polygonal correspondant intégré dans l'enveloppe intérieure, tandis que chaque générateur comporte latéralement en partie basse, du côté opposé au réacteur, un tourillon en saillie (11) précité de section polygonale prenant un appui glissant dans un palier à rotule (24) d'alésage polygonal correspondant intégré dans une extension latérale de la partie extérieure de ladite partie de structure inférieure qui enveloppe au moins partiellement les boîtes à eau (30) des générateurs de vapeur (2).

3. Dispositif selon l'une des revendications 1 à 2, caractérisé en ce qu'au moins les tourillons (11) en saillie soudés sur la cuve du réacteur comportent un alésage intérieur (8a) pour permettre notamment le passage de tuyauteries implantées dans l'axe dudit alésage.

4. Dispositif selon l'une des revendications précédentes, caractérisé en ce que la partie de structure inférieure (5) précitée comporte en partie basse de chaque générateur de vapeur, deux dispositifs de butée (12, 13) diamétralement opposés, l'un d'eux étant fixe et situé du côté du tourillon en saillie soudé à la partie basse des générateurs, pour bloquer ceux-ci longitudinalement dans l'hypothèse d'une rupture de la tubulure reliant la cuve du réacteur à l'un des générateurs, et l'autre butée étant située du côté de la cuve pour bloquer transversalement les générateurs dans la même hypothèse.

5. Dispositif selon l'une des revendications 2 à 4 caractérisé en ce que les enveloppes coaxiales (5a, 5b) précitées de la partie de structure inférieure (5) supportant la cuve (7) et ses générateurs (2) associés par l'intermédiaire des tourillons en saillie (11) précités, comprennent une enveloppe interne (5a) ayant la forme d'un polyèdre, et une enveloppe externe (5b) présentant également la forme d'un polyèdre, lesdites enveloppes définissant entre elles et avec la cuve des volumes étanches et remplis d'eau pour assurer la protection neutronique.

6. Dispositif selon l'une des revendications précédentes, caractérisé en ce que les parois précitées de la partie de structure supérieure enveloppant les générateurs de vapeur forment des prismes droits (16) à base trapézoïdale ayant des parois communes avec la piscine de déchargement (15) de la cuve (7).

7. Dispositif de supportage et de protection pour une chaudière nucléaire compacte constituée par un réacteur nucléaire dont la cuve (7) est disposée dans l'axe vertical (20) de l'ensemble, et par un moins deux générateurs de vapeur (2) répartis régulièrement autour de cette cuve et reliés à elle chacun par au moins une canalisation courte (3) permettant la circulation d'un fluide d'échange thermique primaire entre la chaudière et le générateur de vapeur et assurant en même temps la solidarisation mécanique du générateur et de la cuve, ce dispositif de supportage comportant:

— une structure de supportage métallique rigide enveloppant au moins partiellement la chaudière de manière à en assurer la protection,
— et des supports, chacun de ces supports comportant
— un palier de support (9, 24) monte dans la structure et un tourillon de support (8, 11) fixe en saillie sur la chaudière et monté glissant dans ce palier de manière que cette structure supporte la chaudière par l'intermédiaire de ces paliers et de ces tourillons,
— ce dispositif de supportage étant caractérisé par le fait que lesdits paliers de support et lesdits tourillons de support comportent chacun deux faces d'appui planes symétriques par rapport à un plan vertical et divergeant vers le haut (forme en V), ces faces d'appui étant des faces supérieures sur lesdits paliers (V en creux), et des faces inférieures sur lesdits tourillons (V en saillie), les plans verticaux de symétrie de ces supports passant par l'axe (20) dudit ensemble,
— les paliers de support étant des paliers à rotules,
— un dit tourillon de support (11) étant fixé à chacun desdits générateurs de vapeur de côté diamétralement opposé à la cuve,
— au moins duex dits tourillons de support (8) etant fixés à la cuve symétriquement par rapport audit axe vertical,
— lesdits tourillons de support fixés aux générateurs de vapeur et à la chaudière étant disposés sensiblement dans un même plan horizontal.

8. Dispositif selon la revendication 7 dans lequel ladite structure de support comporte une partie inférieure (5) très rigide enveloppant la cuve et portant lesdits paliers de support, cette partie inférieure comportant à sa base une semelle métallique épaisse (7), caractérisé par le fait que, cette partie inférieure de la structure de support comporte deux enveloppes métalliques soudées sur ladite semelle à leurs parties inférieures à savoir, une enveloppe interne (5a) enveloppant la cuve et une enveloppe externe (5b) entourant cette enveloppe interne, une plaque métallique intermédiaire (5f) solidarisant ces deux enveloppes à leurs parties supérieures.

9. Dispositif selon la revendication 8 caractérisé par le fait que lesdites enveloppes définissent au moins entre elles des volumes étanches remplis d'eau pour assurer une protection neutronique.

10. Dispositif selon la revendication 7, applicable au supportage d'une chaudière nucléaire dans laquelle lesdits générateurs de vapeur (2) présentent la forme générale de colonnes verticales dont une partie inférieure est située au niveau d'une partie supériure de la cuve, la partie supérieure de ces générateurs de vapeur étant située plus haut que cette cuve, caractérisé par le fait que ladite structure de support comporte une partie inférieure très rigide (5) enveloppant la cuve et portant lesdits paliers de support (9, 24) et une partie supérieure (6) fixée à la partie inférieure, des parties latérales (16) de cette partie supérieure entourant lesdits générateurs de vapeur, une partie centrale (14) de cette partie supérieure constituant les parois d'une piscine (15) pour le déchargement des éléments combustibles du réacteur nucléaire, des caissons raidisseurs (17) reliant les parties supérieures de ces parties latérales (16),

— les extrémités supérieures de ces parties latérales (16) portant des paliers dans lesquels s'engagent des tourillons (18) fixés verticalement à l'extrémité supérieure des générateurs de vapeur.

11. Dispositif selon la revendication 7 caractérisé par le fait qu'il comporte deux butées à la partie inférieure de chaque générateur de vapeur (2), ces butées étant disposées dans un même plan vertical longitudinal passant par l'axe (20) de l'ensemble de génération de vapeur et par l'axe (21) du générateur de vapeur, à savoir une butée (12) qui est la plus éloignée de l'axe de la chaudière et qui limite le déplacement horizontal du générateur de vapeur dans ce plan longitudinal par rapport à la partie inférieure de ladite structure du support, et une butée (13) qui est la plus proche de l'axe de la chaudière et qui limite le déplacement horizontal du générateur de vapeur transversalement à ce plan longitudinal par rapport à la partie inférieure de la structure de support.

12. Dispositif selon la revendication 7, caractérisé par le fait que lesdits tourillons de support (8) fixés au réacteur comporte un alésage intérieur permettant le passage de tuyauteries.

**Claims**

1. A device for supporting and protecting a compact nuclear heat generation assembly, constituted by a nuclear reactor, the vessel of which being disposed in the vertical axis (20) of the assembly, and by at least two steam generators (2) distributed regularly around this reactor and each connected thereto by means of a short tube (3), this tube assuring the mechanical consolidation of the generator and the reactor vessel and permitting therebetween the circulation of a primary thermic exchange fluid, this supporting device being of the type comprising a metallic structure surrounding at least in part the nuclear heat generation assembly and supporting it via bearing members, characterized by the fact that the said metallic structure is composed of:

— a very rigid lower part (5), into which the reactor vessel is introduced and on which it rests, as well as its associated steam generators (2), by means of pivot pins (11) welded protrudingly on said vessel (1) and said generators (2), all these pivot pins being situated sensibly in the same horizontal plane and their axes converging to the axis of said vessel and being slidably mounted in bearings (8) which are integrated into said structure, so that this structure supports and holds the entire assembly via said pivot pins (11), these pins being of a polygonal section and the bearings having a corresponding polygonal bore and both comprising two plane support faces which are symmetric with reference to a vertical plane (V-shaped),

— and, on the other hand, an upper part (6) which constitutes a lid and which is rigidly fixed to the lower structure, the central part of the latter constituting preferably the wall of the discharge pool (15) of the reactor, and the external part constituting lateral walls which surround entirely the steam generators so as to provide their mechanical protection and the biological protection therearound, this upper part maintaining simultaneously the upper end of the steam generators via pivot pins which are disposed in the axis of each generator.

2. A device according to claim 1, characterized in that the said lower part of the structure (5) being essentially constituted by two coaxial casings (5a, 5b) surrounding the vessel (1) of the reactor and welded on a thick base plate (7) serving as a seat for the heat generation assembly, the said vessel is provided laterally with at least two said protruding pivot pins (11) of polygonal cross-section supported slidably in bearings with a corresponding polygonal bore integrated in the inner casing, whereas each generator comprises laterally at its lower portion on the side opposite to the reactor a said protruding pivot pin (11) of polygonal cross-section supported slidably in a bearing (24) with a corresponding polygonal bore provided in a lateral extension of the outer part of said lower part of the structure which surrounds at least partially the water collectors (30) of the steam generators (2).

3. A device according to one of the claims 1 to 2, characterized in that at least the protruding pivot pins (11) welded on the reactor vessel comprise an inner bore (8a) in order to permit notably the passage of tubes installed in the axis of said bore.

4. A device according to one of the preceding claims, characterized in that said lower part of the structure (5) comprises at the lower portion of each steam generator two diametrically opposed stop devices (12, 13), one of which is fixed and located on the side where the protruding pivot pin is welded to the lower portion of the generators, so as to hold the latter longitudinally in case of a rupture between the vessel and a generator, whereas the other stop is located on the side of the vessel so as to hold the generators transversely in case of such a rupture.

5. Device according to one of the claims 2 to 4, characterized in that the said coaxial casings (5a, 5b) of the lower part of the structure (5) supporting the vessel (1) and its associated generators (2) by means of the said protruding pivot pins (11), comprise an inner casing (5a) in the shape of a polyhedron, and an outer casing (5b) also in the shape of a polyhedron, said casings defining between them and with the vessel fluid-tight volumes filled with water so as to ensure the neutronic protection.

6. Device according to one of the preceding claims, characterized in that the said walls of the upper part of the structure surrounding the steam generators from right prisms (16) with a trapezoidal base having common walls with the vessel (1) discharge pool (15).

7. A device for supporting and protecting a compact nuclear heat generation assembly, constituted by a nuclear reactor, the vessel (1) of which is disposed in the vertical axis (20) of the assembly, and by at least two steam generators (2) distributed regularly around this vessel and each connected thereto by at least one short tube (3) permitting the circulation of a primary thermic exchange fluid between the reactor and the steam generator and ensuring at the same time the mechanical consolidation of the generator and the vessel, this supporting device comprising:

— a rigid metallic supporting structure surrounding at least in part the reactor so as to ensure its protection,
— and supports, each of these supports comprising
  — a support bearing (9, 24) mounted in the structure and
  — a fixed protruding support pivot pin (8, 11) on the reactor and slidably mounted in this bearing so that this structure supports the reactor via these bearings and pivot pins,

this supporting device being characterized in that said support bearings and said support pivot pins comprise each two plane support faces which are symmetric with reference to a vertical plane and diverging upwards (V-shape), these support faces being upper faces on said bearings (concave V) and lower faces on said pivot pins (convexe V), the vertical symmetric planes of these supports passing through the axis (20) of said assembly,

— the support bearings being ball-point bearings,
— a said support pivot pin (11) being fixed to each of said steam generators on the side diametrically opposed to the vessel,

— at least two of said support pivot pins (8) being fixed to the vessel symmetrically with respect to said vertical axis,
— said support pivot pins fixed to the steam generators and to the reactor being disposed sensibly in the same horizontal plane.

8. Device according to claim 7, in which said supporting structure comprises a very rigid lower part (5) surrounding the vessel and comprising said support bearings, this lower part comprising at its basis a thick base plate (7), characterized in that this lower part of the supporting structure comprises two metallic covers welded to said base plate at their lower parts, i.e. an internal cover (5a) surrounding the vessel and an exterior cover (5b) surrounding this internal cover, an intermediate metallic plate (5f) consolidating these two covers at their upper parts.

9. Device according to claim 8, characterized in that the said covers define at least between themselves tight volumes which are filled with water in order to provide a neutron protection.

10. Device according to claim 7, applyable to the support of a nuclear heat generation assembly in which said steam generators (2) have the general shape of vertical column, a lower part of which is situated at the level of an upper part of the vessel, the upper part of these steam generators being situated higher than this vessel, characterized in that said supporting structure comprises a very rigid lower part (5) surrounding the vessel and comprising said supporting bearings (9, 24), and an upper part (6) being fixed at the lower part, lateral parts (16) of this upper part surrounding said steam generators, a central part (14) of this upper part constituting the walls of a pool (15) for the discharge of fuel elements of the nuclear reactor, rigidifying casings (17) connecting the upper parts of these lateral parts (16),

— the upper ends of these lateral parts (16) comprising bearings into which pivot pins (18) engage, which are fixed vertically to the upper end of the steam generators.

11. Device according to claim 7, characterized in that it comprises two stops at the lower part of each steam generator (2), these stops being disposed in a common vertical longitudinal plane passing through the axis (20) of the heat generation assembly and through the axis (21) of the steam generator, i.e. a stop (12) which is farther away from the axis of the reactor and which limits the horizontal displacement of the steam generator in this longitudinal plane with respect to the lower part of said supporting structure, and a stop (13) which is closer to the axis of the reactor and which limits the horizontal displacement of the steam generator transversally to this longitudinal plane with respect to the lower part of the supporting structure.

12. Device according to claim 7, characterized in that said supporting pivot pins (8) fixed to the reactor comprise an inner bore permitting the passage of tubes.

**Patentansprüche**

1. Stütz- und Schutzvorrichtung für eine kompakte nukleare Dampferzeugungseinheit, bestehend aus einem Kernreaktor, dessen Behälter (1) in der senkrechten Achse (20) der Einheit angeordnet ist, und aus mindestens zwei Dampferzeugern (2), die gleichmäßig um diesen Reaktor herum angeordnet und je mit ihm über ein kurzes Rohr (3) verbunden sind, wobei dieses Rohr die mechanische Verbindung zwischen dem Dampferzeuger und dem Behälter herstellt und zwischen ihnen die Zirkulation eines primären Wärmetauscherfluids ermöglicht, wobei diese Stützvorrichtung von der Art ist, die eine metallische Struktur aufweist, welche zumindest teilweise die Dampferzeugungseinheit umhüllt und sie mithilfe von Stützorganen hält, dadurch gekennzeichnet, daß die metallische Struktur besteht aus:

— einem sehr starren unteren Teil (5), in den der Reaktorbehälter eingelassen ist, der sich wie auch seine zugehörigen Dampferzeuger (2) über Lagerzapfen (11), die vorspringend auf den Behälter (1) und die Dampferzeuger (2) geschweißt sind, auf diesem Teil abstützt, wobei alle diese Lagerzapfen sich in etwa in der gleichen waagerechten Ebene befinden, ihre Achsen auf die Achse des Behälters zulaufen und sie gleitend in Drehlagern (8), die in die Struktur integriert sind, angebracht sind, so daß die Struktur die Dampferzeugungseinheit mithilfe dieser Lagerzapfen stützt und hält, wobei die Lagerzapfen einen vieleckigen Querschnitt und die Drehlager eine entsprechende vieleckige Bohrung aufweisen und je zwei ebene und in Bezug auf eine senkrechte Ebene symmetrische Stützseiten aufweisen (V-Form);
— und andererseits einem oberen Teil (6), der einen Deckel bildet und starr auf der unteren Struktur befestigt ist, deren mittlerer Teil vorzugsweise die Wände des Entladebeckens (15) des Reaktors bildet und deren äußerer Teil die Seitenwände bildet, die die Dampferzeuger ganz umhüllen, um ihren mechanischen Schutz und den biologischen Schutz um sie herum zu sichern, wobei dieser obere Teil gleichzeitig das obere Ende der Dampferzeuger über entlang ihren Achsen eingeschweißte Lagerzapfen hält.

2. Vorrichtung nach Anspruch 1, dadurch gekennzeichnet, daß der untere Teil der Struktur (5) im wesentlichen aus zwei koaxialen Hüllen (5a, 5b) besteht, die den Behälter (1) des Reaktors umgeben und auf eine dicke Basisplatte (7) aufgeschweißt sind, auf welcher die Dampferzeugungseinheit sitzt, und der Behälter seitlich mindestens zwei vorspringende Lagerzapfen (11) mit vieleckigem Querschnitt aufweist, die sich gleitend auf Drehlager mit entsprechender vieleckiger Bohrung abstützen, welche in die innere Hülle integriert sind, während jeder Dampferzeuger seitlich am unteren Teil auf der dem Reaktor entgegengesetzten Seite einen vorspringenden Lagerzapfen (11) mit vieleckigem Querschnitt aufweist, der sich gleitend in einem Drehlager (24) mit entsprechender vieleckiger Bohrung abstützt, welches in eine seitliche Fortsetzung des äußeren Teils des unteren Teils der Struktur integriert ist, die zumindest teilweise die Wasserkollektoren (30) der Dampferzeuger (2) umhüllt.

3. Vorrichtung nach einem der Ansprüche 1 bis 2, dadurch gekennzeichnet, daß zumindest die vorspringenden Lagerzapfen (11), die auf den Behälter des Reaktors aufgeschweißt, sind, eine innere Bohrung (8a) aufweisen, um insbesondere den Durchlaß von Rohren zu ermöglichen, die entlang der Achse der Bohrung verlaufen.

4. Vorrichtung nach einem der vorstehenden Ansprüche, dadurch gekennzeichnet, daß der untere Teil der Struktur (5) am unteren Teil jedes Dampferzeugers zwei Anschlagvorrichtungen (12, 13) aufweist, die sich diametral gegenüberliegen, wobei eine von ihnen fest auf der Seite des vorspringenden Lagerzapfens angebracht ist, der sich am unteren Teil der Dampferzeuger befindet, um diese in Längsrichtung zu blockieren im Fall eines Bruchs des Rohrs, das den Behälter des Reaktors mit einem der Dampferzeuger verbindet, und die andere Anschlagvorrichtung auf der Seite des Behälters angebracht ist, um die Dampferzeuger im Fall eines solchen Bruchs in Querrichtung zu blockieren.

5. Vorrichtung nach einem der Ansprüche 2 bis 4, dadurch gekennzeichnet, daß die koaxialen Hüllen (5a, 5b) des unteren Teils der Struktur (5), die den Behälter (1) und seine zugehörigen Dampferzeuger (2) über vorspringende Lagerzapfen (11) stützen, aus einer inneren Hülle (5a) in Form eines Polyeders und einer äußeren Hülle (5b) ebenfalls in Form eines Polyeders bestehen, die zwischen sich und mit dem Behälter dichte und mit Wasser gefüllte Volumen bilden, um den Neutronenschutz zu sichern.

6. Vorrichtung nach einem der vorstehenden Ansprüche, dadurch gekennzeichnet, daß die Wände des oberen Teils der Struktur, die die Dampferzeuger umhüllen, gerade Prismen mit trapezförmiger Basis bilden, die mit dem Entladebecken (15) des Behälters (1) gemeinsame Wände haben.

7. Stütz- und Schutzvorrichtung für eine kompakte nukleare Dampferzeugungseinheit, bestehend aus einem Kernreaktor, dessen Behälter (1) in der senkrechten Achse (20) der Einheit angeordnet ist, und aus mindestens zwei Dampferzeugern (2), die gleichmäßig um diesen Behälter herum angeordnet und je mit ihm über mindestens ein kurzes Rohr (3) verbunden sind und das Zirkulieren eines primären Wärmetauscherfluids zwischen der Dampferzeugungseinheit und dem Reaktor ermöglichen und gleichzeitig die mechanische Verbindung zwischen dem Dampferzeuger und dem Behälter herstellen, wobei diese Stützvorrichtung aufweist:

— eine starre metallische Stützstruktur, die zumindest teilweise die Dampferzeugungseinheit umhüllt um so ihren Schutz zu gewährleisten,
— und Stützmittel, von denen jedes aufweist
  — ein Stützlager (9, 24), das in die Struktur eingebaut ist,
  — und einen Lagerzapfen (8, 11), der vorspringend auf der Einheit angebracht ist und gleitend in diesem Lager angegebracht, ist, so daß diese Struktur die Einheit über diese Lager und Lagerzapfen hält,

dadurch gekennzeichnet, daß die Stützlager und Lagerzapfen je zwei ebene Stützflächen aufweisen, die symmetrisch in Bezug auf eine senkrechte Ebene sind und nach oben auseinanderlaufen (V-Form), wobei diese Stützflächen obere Seiten auf den Lagern (hohles V) und untere Seiten der Lagerzapfen (vorspringendes V) sind, wobei die senkrechten Symmetrieebenen dieser Stützvorrichtungen durch die Achse (20) der Einheit gehen,

— wobei die Stützlager Drehlager sind,
— wobei ein Lagerzapfen an jedem der Dampferzeuger auf der dem Behälter diametral gegenüberliegenden Seite angebracht ist,
— wobei mindestens zwei der Lagerzapfen (8) am Behälter symmetrisch in Bezug auf die senkrechte Achse angebracht sind,
— und die an den Dampferzeugern und dem Reaktor angebrachten Lagerzapfen in etwa in der gleichen waagerechten Ebene liegen.

8. Vorrichtung nach Anspruch 7, in der die Stützstruktur einen sehr starren unteren Teil (5) aufweist, der den Behälter umhüllt und die Stützlager trägt, wobei dieser untere Teil an seinem unteren Ende eine dicke Basisplatte (7) aufweist, dadurch gekennzeichnet, daß dieser untere Teil der Stützstruktur zwei metallische Hüllen aufweist, die an ihrem unteren Ende auf die Basisplatte aufgeschweißt sind, d.h. eine innere Hülle (5a), die den Behälter umgibt, und eine äußere Hülle (5b), die diese innere Hülle umgibt, wobei eine metallische Zwischenplatte (5f) diese beiden Hüllen an ihren oberen Enden miteinander verbindet.

9. Vorrichtung nach Anspruch 8, dadurch gekennzeichnet, daß die Hüllen zumindest zwischen sich dichte mit Wasser gefüllte Volumen bilden, um einen Neutronenschutz zu gewährleisten.

10. Vorrichtung nach Anspruch 7, anwendbar bei der Stützung einer nuklearen Dampferzeugungseinheit, bei der die Dampferzeuger (2) die allgemeine Form senkrechter Säulen aufweisen, von denen ein unterer Teil sich in Höhe eines oberen Teils des Behälters befindet, wobei der obere Teil dieser Dampferzeuger höher als dieser Behälter liegt, dadurch gekennzeichnet, daß die Stützstruktur einen sehr starren unteren Teil (5) aufweist, der den Behälter umhüllt und die Stützlager (9, 24) trägt, und einen oberen Teil (6), der am unteren Teil befestigt ist, wobei Seitenteile (16) dieses oberen Teils die Dampferzeuger umgeben, ein mittlerer Teil (14) dieses oberen Teils die Wänd eines Entladebeckens (15) für die Brennelemente des Kernreaktors bildet und Verstärkungskästen (17) die oberen Teile dieser Seitenteile (16) verbinden,

— wobei die oberen Enden dieser Seitenteile (16) Lager tragen, in die Lagerzapfen (18) eingeführt sind, die senkrecht am oberen Ende der Dampferzeuger befestigt sind.

11. Vorrichtung nach Anspruch 7, dadurch gekennzeichnet, daß sie zwei Anschläge am unteren Teil jedes Dampferzeugers (2) aufweist, die in der gleichen senkrechten Längsebene angeordnet sind, die durch die Achse (20) der Dampferzeugungseinheit und die Achse (21) des Dampferzeugers geht, d.h. ein Anschlag (12), der am weitesten von der Achse der Einheit entfernt ist und die waagerechte Verschiebung des Dampferzeugers in dieser Längsebene in Bezug auf den unteren Teil der Stützstruktur begrenzt, und ein Anschlag (13), der der Achse der Einheit am nächsten ist und der die waagerechte Verschiebung des Dampferzeugers quer zu dieser Längsebene in Bezug auf den unteren Teil der Stützstruktur begrenzt.

12. Vorrichtung nach Anspruch 7, dadurch gekennzeichnet, daß die Lagerzapfen (8), die am Reaktor befestigt sind, eine innere Bohrung aufweisen, die den Durchlaß von Rohren ermöglicht.

## FIG.1.

## FIG.2

# FIG.3

## FIG.4

FIG.5

FIG.6